(19) Europäisches Patentamt
European Patent Office
Office européen des brevets

(11) Numéro de publication: **0 235 048**
**B1**

(12) **FASCICULE DE BREVET EUROPEEN**

(45) Date de publication du fascicule du brevet: **07.11.90**

(21) Numéro de dépôt: **87420006.6**

(22) Date de dépôt: **08.01.87**

(51) Int. Cl.⁵: **C 08 L 83/04,** C 08 K 5/54, C 08 K 5/14, C 08 K 3/22

(54) **Composition organopolysiloxane élastomère vulcanisable à chaud, à resistance à la réversion et à la tenue aux huiles améliorées.**

(30) Priorité: **09.01.86 FR 8600403**

(43) Date de publication de la demande:
**02.09.87 Bulletin 87/36**

(45) Mention de la délivrance du brevet:
**07.11.90 Bulletin 90/45**

(84) Etats contractants désignés:
**AT BE CH DE ES FR GB GR IT LI LU NL SE**

(56) Documents cités:
**EP-A-0 062 427**
**GB-A-2 030 582**
**GB-A-2 066 277**
**US-A-3 865 778**

(73) Titulaire: **RHONE-POULENC CHIMIE**
**25, quai Paul Doumer**
**F-92408 Courbevoie Cédex (FR)**

(72) Inventeur: **Lagarde, Robert**
**5, rue des Lilas**
**F-69320 Feyzin (FR)**

(74) Mandataire: **Trolliet, Maurice et al**
**RHONE-POULENC CHIMIE Service Brevets**
**Chimie Centre de Recherches des Carrières B.P. 62**
**F-69192 Saint-Fons Cédex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 235 048 B1

**Description**

La présente invention a pour objet des compositions organopolysiloxanes, formées principalement par mélange de gommes diorganopolysiloxanes, de charges, d'un groupe d'additifs particuliers et de péroxydes organiques. Les compositions du type ci-dessus sont bien connues des fabricants de caoutchoucs silicones et ont l'avantage, d'une part d'être faciles à travailler à l'état cru et, d'autre part de conduire, après durcissement à chaud, à des élastomères ayant de bonnes caractéristiques physiques.

L'introduction de divers additifs pour modifier les propriétés des compositions organopolysiloxanes, et des élastomères en découlant, est décrite dans de nombreux documents dont les premiers remontent aux débuts de la commercialisation des élastomères silicones durcis à chaud.

Ainsi par le brevet US—A—3 379 607 il est connue de rajouter un composé tel que le méthacryloxypropyltriméthoxysilane à un élastomère polysiloxane.

Par le brevet US—A—4 202 812 il est connu d'ajouter des acryloxy (ou méthacryloxy)alkylalcoxy à la dose de 0,08 à 0,3 parties d'additif pour 100 parties d'une base de caoutchouc silicone associées à 25 à 300 parties de charges non renforçantes en vue d'améliorer les propriétés dynamométriques des élastomères vulcanisés.

La demande de brevet européen EP—A—149 882 enseigne l'addition à une composition élastomère organopolysiloxane d'un mélange d'additifs qui peut être un composé organosilicié comportant un groupe acryl (ou méthacryl)oxyalkyle associé à au moins deux autres additifs choisis parmi un organohydrogénopolysiloxane, un polymère organofluoré et un composé renfermant du bore. Par ailleurs, à la page 18, lignes 6 à 12 de cette demande il est indiqué que ce mélange d'additifs peut comporter en outre d'autres adjuvants bien connus de l'homme de l'art spécialiste des caoutchoucs silicones en particulier des hydroxydes et oxydes de calcium, de magnésium et de baryum neutralisant les produits de décomposition formés au cours de la réticulation ou à température élevée comme décrit par exemple dans la demande de brevet européen EP—A—51 369.

Par le brevet US—A—3 261 801 il est connu d'améliorer la tenue à la reversion des caoutchoucs de silicone en ajoutant de 0,1 à 10 parties d'un oxyde de barium pour 100 parties de gomme organopolysiloxane.

Par le brevet US—A—3 711 520 il est connu d'améliorer la résistance à la flamme des caoutchoucs silicones conférés par l'addition de platine (brevet US—A—3 514 424) en ajoutant en outre un oxyde d'un métal alcalino-terreux ou d'un métal du groupe 2 b (Zn, Cd, Hg).

La demande japonaise KOKAI 48/093 658 enseigne l'addition conjugée à une composition organopolysiloxane d'un organohydrogénopolysiloxane et d'un dérivé du calcium tel que CaO et $Ca(OH)_2$ pour améliorer la déformation rémanente à la compression et supprimer l'efflorescence.

Par le brevet US 4 301 056 il est connu d'améliorer la résistance à la réversion, la déformation rémanente à la compression et la résistance aux huiles chaudes par l'introduction d'hydroxyde de calcium traité par un composé organosilicique.

A l'heure actuelle, le marché de l'industrie des véhicules à moteur à combustion interne est en pleine expansion pour les élastomères silicone par suite de l'augmentation de température au sein des moteurs en vue d'améliorer leur rendement thermique et d'abaisser leur consommation en carburant. Les constructeurs automobiles se trouvent ainsi dans l'obligation de remplacer les caoutchoucs traditionnels à tenue thermique insuffisante par d'autres caoutchoucs, en particulier les caoutchoucs de silicone. Il existe donc un besoin d'une composition élastomère organopolysiloxane durcissant en un caoutchouc de silicone qui, d'une part présente et conserve à chaud au contact des différentes huiles utilisées dans un véhicule à combustion interne de bonnes propriétés mécaniques telle que la déformation rémanente à la compression et une bonne élasticité et, d'autre part, possède une borne résistance aux diverses sortes d'huiles chaudes en contact avec les joints d'étanchéité en caoutchouc de silicone dans des systèmes clos.

La présente invention a précisément pour but de proposer une telle composition élastomère organopolysiloxane.

Ce but et d'autres sont atteints par la présente invention qui concerne en effet une composition élastomère organopolysiloxane vulcanisable à chaud, caractérisée en ce qu'elle comporte:

A. — 100 parties d'au moins une gomme diorganopolysiloxane ayant une viscosité supérieure à 1 000 000 mPa.s à 25°C.

B. — 5 à 150 parties d'une charge renforçante.

C. — 0,1 à 7 parties d'un péroxyde organique.

D. — 0,01 à 5 parties d'un composé organosilicique comportant, relié à l'atome de silicium, au moins un groupe acryloxyalkyle ou méthacryloxyalkyle.

E. — 0,1 à 20 parties d'au moins un produit choisi parmi les oxydes et les hydroxydes et les hydroxydes d'un métal alcalino-terreux.

Vis-à-vis de l'art antérieur, la présente invention a permis de mettre en évidence de façon tout à fait surprenante et inattendue qu'il existe une synergie importante des additifs D. et E. respectivement au niveau de l'amélioration et de la conservation des propriétés mécaniques et de la tenue aux huiles de caoutchoucs de silicones résultant de la vulcanisation des compositions organopolysiloxanes.

Dans ce que précède ou ce qui suit, sauf mentions contraires, les parties ou les pourcentages sont en poids.

Les gommes A. sont des produits bien connus, commercialisés par les fabricants de silicones et elles peuvent être fabriquées en opérant selon les techniques déjà connues.

Les gommes diorganopolysiloxaniques A. de viscosité supérieure à 1 000 000 mPa.s à 25°C de préférence supérieure à 2 000 000 mPa.s à 25°C, sont des polymères linéaires, de poids moléculaire élevé, dont la chaîne diorganopolysiloxane est constituée essentiellement des motifs de formule $R_2SiO$; cette chaîne est bloquée à chaque extrémité par des motifs de formule $R_2SiO_{0,5}$ et/ou le radical de formule OR'. R et R' sont des radicaux organique en particuliere alkyle. La présence, le long de la chaîne diorganopolysiloxane, de faibles quantités de motifs autres que $R_2SiO$, par exemple de formule $RSiO_{1,5}$ et/ou $SiO_2$ n'est cependant pas exclue dans la proportion d'au plus 2% par rapport au nombre de motifs $R_2SiO$. Bien que la signification des radicaux R et R' soit explicitée ci-dessous plus en détail, on doit préciser que par radical alkyle, on entend des radicaux alkyles en $C_1$—$C_4$ et plus spécialement les radicaux méthyle, éthyle, n-propyle et n-butyle.

A titre d'exemples concrets de motifs de formules $R_2SiO$ et $R_3SiO_{0,5}$ et de radicaux de formule OR', peuvent être cités ceux de formules:

$(CH_3)_2SiO$, $CH_3(CH_2{=}CH)SiO$, $CH_3(C_6H_5)SiO$, $(C_6H_5)_2SiO$,

$CH_3(C_2H_5)SiO$, $(CH_3CH_2CH_2)CH_3SiO$, $CH_3(n.C_3H_7)SiO$,

$(CH_3)_3SiO_{0,5}$, $(CH_3)_2CH_2{=}CHSiO_{0,5}$, $(CH_3)C_6H_5)_2SiO_{0,5}$, $(CH_3)(C_6H_5)(CH_2{=}CH)SiO_{0,5}$,

OH, $—OCH_3$, $—OC_2H_5$, $—O\text{-}n.C_3H_7$, $—O\text{-}iso.C_3H_7$, $—O\text{-}n.C_4H_9$, $—OCH_2CH_2OCH_3$.

Les gommes A. préférées sont les gommes formées d'un enchaînement de motifs siloxy de formule $R_2SiO$, bloqués à chaque extrémité de leurs chaînes par un motif siloxy de formule $R_3SiO_{0,5}$ et/ou un radical de formule OR'; dans ces formules les symboles R, identiques ou différents, représentent des radicaux méthyle, éthyle, n-propyle, phényle, vinyle et trifluoro-3,3,3 propyle, au moins 60% en nombre de ces radicaux étant des radicaux méthyle et au plus 3% molaire des motifs siloxy étant des motifs organovinylsiloxy, le symbole R' représente un atome d'hydrogène, un radical alkyle ayant de 1 à 4 atomes de carbone, le radical bétaméthoxy-éthyle.

Dans le cadre de présente invention on préfère tout particulièrement utiliser des gommes diméthylpolysiloxanes vinylées, c'est-à-dire comportant des radicaux vinyle liés aux atomes de silicium dans la chaîne et/ou aux extrémités de la chaîne à une teneur molaire en motifs vinylmethylsiloxyles d'au plus 1%.

Les charges B., de préférence les silices renforçantes B. sont utilisées à raison de 5 à 150 parties, de préférence 8 à 100 parties, pour 100 parties de gomme diorganopolysiloxanes A.. Elles sont choisies parmi les silices de combustion et les silices de précipitation. Elles ont une surface spécifique, mesurée selon les méthodes BET et CTAB, d'au moins 50 $m^2$/g, de préférence supérieure à 70 $m^2$/g, une dimension moyenne des particules primaires inférieure à 80 nonomètres et une densité apparente inférieure à 200 g/litre.

Ces silices peuvent être incorporées telles quelles ou après avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysiloxanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane. Lors de ce traitement, les silices peuvent accroître leur poids de départ jusqu'à un taux de 20%, de préférence 18% environ.

En plus des silices renforçante B. peuvent être introduites des charges minérales semi-renforçantes ou de bourrage B. Ces charges B. sont plus grossières et ont un diamètre particulaire moyen supérieur à 0,1 µm. Ces charges B. sont représentées plus spécialement par le quartz broyé, les argiles calcinées, les silices de diatomées, le carbonate de calcium, les oxydes de fer, de titane, de magnésium, d'aluminium, le sulfate de zinc et le sulfate de baryum. Elles sont introduites à raison de 5 à 120 parties, de préférence de 10 à 50 parties, pour 100 parties de gomme A. Ces charges minérales peuvent être utilisées telles quelles, c'est-à-dire non traitées ou traitées avec les composés organosiliciques mentionnés ci-avant dans le cas des silices renforçantes B.

Les péroxydes organiques C. sont utilisés à raison de 0,1 à 7 parties, de préférence 0,2 à 5 parties, pour 100 parties des gommes A. Ils sont bien connus des techniciens et comprennent plus spécialement le peroxyde de benzoyle, le peroxyde de dichloro-2,4 benzoyle, le peroxyde de dicumyle, le bis(t-butylperoxy)-2,5 diméthyl-2,5 hexane, le perbenzoate de t-butyle, le carbonate de peroxy t-butyle et d'isopropyle, le peroxyde de di-t-butyle, le bis(t-butylperoxy)-1,1 triméthyl-3,3,5 cyclohexane.

Ces divers peroxydes se décomposent à des températures et à des vitesses parfois différentes. Ils sont choisis en fonction des conditions de durcissement exigées. Dans le cas de l'utilisation de gommes vinylées le bis(t-butylperoxy)-2,5- diméthyl-2,5 hexane convient plus particulièrment.

Les compositions selon l'invention peuvent comporter en outre 0,1 à 10 parties, de préférence 0,3 à 5 parties d'une huile diorganopolysiloxanique de viscosité d'au plus 5 000 mPa.s à 25°C formée d'un

enchaînement de motifs de formule $R''_2SiO$ bioquée à chaque extrémité de sa chaîne par un radical de formule OR'; dans ces formules les symboles R'', identiques ou différents, représentent des radicaux méthyle, phényle, vinyle, au moins 40% en nombre de ces radicaux étant méthyle et le symbole R' a la signification donnée sous A.

En outre des huiles diorganopolysiloxanes F. peuvent être utilisées à raison de 0,1 à 10 parties, de préférence 0,4 à 5 parties pour 100 parties des gommes diorganopolysiloxanes A. Ce sont des polymères linéaires de viscosité relativement peu élevée, au plus 5 000 mPa.s à 25°C, de préférence au plus 4 000 mPa.s à 25°C, dont la chaîne diorganopolysiloxane est formée essentiellement des motifs de formule précitée $R''_2SiO$; cette chaîne est bloquée à chaque extrémité par un radical de formule précitée OR'. Au moins 40% en nombre des radicaux R'' sont des radicaux méthyle, de préférence au moins 45%.

La signification des symboles R'' et R' a été explicitée précédemment.

A titre d'exemples concrets de motifs de formule $R''_2SiO$ et de radicaux de formule OR', peuvent être citrés ceux de formules:

$$(CH_3)_2SiO,\ CH_3(CH_2{=}CH)SiO,\ CH_3(C_6H_5)SiO,\ (C_6H_5)_2SiO,\ C_6H_5(CH_2{=}CH)SiO,$$

$$-OH,\ -OCH_3,\ -OC_2H_5,\ -O\text{-n.}C_3H_7,\ -OCH_2CH_2OCH_3.$$

De préférence, sont utilisées:

des huiles diméthylpolysiloxanes bioquées à chaque extrémité de leur chaîne par des radicaux hydroyle, méthoxyle, bétaméthoxyéthoxyle, de viscosité 10 à 200 mPa.s à 25°C;

des huiles méthylphénylpolysiloxanes, constituées de motifs $CH_3(C_6H_5)SiO$, bioquées à chaque extrémité de leur chaîne par des radicaux hydroxyle et/ou méthoxyle, de viscosité 40 à 2 000 mPa.s à 25°C.

L'utilisation des huiles F. a pour objet d'empêcher les compositions de l'invention de subir une évolution au cours du stockage, et plus précisément de se structurer, de durcir; ce sont donc des agents "antistructures". Leur utilisation est surtout recommandée lorsque les quantités de silices renforçantes B. sont élevées, par exemple au-dessus de 30—40 parties pour 100 parties de gomme A.

D'autres agents "antistructures" peuvent remplacer en totalité ou en partie, les huiles F, par exemple le diphénylsilanediol et les silanes de formules:

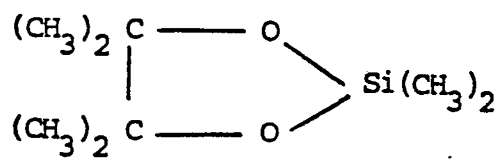

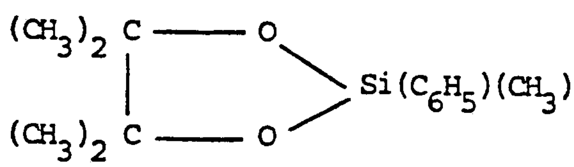

Cependant, ils sont souvent plus coûteux et/ou exigent plus de travail pour leur dispersion dans les compositions de l'invention que les huiles F.

Le composé organosilicique D. portant au moins un groupe acryloxyalkyle ou méthacryloxyalkyle peut être choisi parmi:

un silane (1) répondant à la formule:

$$CH_2 = CR^1COO(CH_2)_a\overset{\overset{\displaystyle R''b}{|}}{Si}(OR^2)_{3-b} \qquad (1)$$

dans laquelle le symbole R'' est choisi parmi les radicaux méthyle, vinyle et phényle, le symbole $R^1$ représente un atome d'hydrogène, le radical méthyle, le symbole $R^2$ représente un radical méthyle, éthyle, n-propyle, bétaméthoxyéthyle, le symbole a représente un nombre de 1 à 5 et le symbole b représent un nombre de 0 à 2;

les produits d'hydrolyse partielle du silane (1) précédent;

les polymères provenant de la réaction du silane (2) de formule $CH_2{=}C(R^1)COO(CH_2)_aSi(OR^2)_3$, cette formule découlant de la formule précédente lorsque b = 0, avec une huile diorganopolysiloxane choisie parmi les huiles F. bloquées à chaque extrémité de leur chaîne par un radical hydroxyle.

Les composés organosiliciques D. sont utilisés à raison de 0,01 à 5 parties, de préférence 0,1 à 2 parties, pour 100 parties des gommes diorganopolysiloxanes A. Ils comportent les silanes répondant à la formule générale précitée:

$$CH_2{=}C(R^1)COO(CH_2)_aSi(R'')_b(OR^2)_{3-b} \quad (1)$$

dans laquelle, comme déjà indiqué, le symbole R'' représente un radical méthyle, vinyle, phényle, le symbole $R^1$ représente un atome d'hydrogène, le radical méthyle, le symbole $R^2$ représente un radical méthyle, éthyle, n-propyle, bétaméthoxyéthyle, le symbole a représente un nombre de 1 à 5 et la symbole b représente un nombre de 0 à 2. Ils comprennent donc les méthacryloxyalkylalcoxysilanes et les acryloxyalkylalcoxysilanes qui figurent par exemple dans le brevet américain US—A—3 567 497.

A titre d'exemples concrets de ces silanes peuvent être cités ceux de formules:

$$CH_2{=}CH{-}COO(CH_2)_3Si(OCH_3)_3,\ CH_2{=}CH{-}COO(CH_2)_3Si(OCH_2CH_2OCH_3)_2C_6H_5$$

$$CH_2{=}CH{-}COO(CH_2)_3Si(OC_2H_5)_3,\ CH_2{=}C(CH_3)COO(CH_2)_3Si(OCH_3)_3$$

$$CH_2{=}C(CH_3)COO(CH_2)_3SiCH_3(OCH_3)_2,\ CH_2{=}C(CH_3)COO(CH_2)_5Si(OCH_3)_3$$

En dehors des silanes (1) sont utilisables dans les mêmes proportions, leurs produits d'hydrolyse partielle qui répondent à la formule générale moyenne:

$$CH_2 = C(R^1)COO(CH_2)_a\underset{\displaystyle (R'')_b}{\underset{|}{Si}}(OR^2)_cO_{\frac{[3-(b+c)]}{2}}$$

dans laquelle les symboles R'', $R^1$, $R^2$, a et b ont la signification donnée précédemment à propos de la formule des silanes et le symbole c représente un nombre quelconque s'étendant de 0,5 à 2,2, la somme b+c s'étendant de 0,8 à 2,5.

Il est recommandé d'effectuer l'hydrolyse des silanes à des températures comprises dans l'intervalle 30 à 100°C, en présence d'un catalyseur acide tel que l'acide chlorhydrique, l'acide phosphorique, l'acide acétique, avec une quantité molaire d'eau inférieure à la quantité nécessaire pour hydrolyser toutes les liaisons $SiOR^2$ (une mole d'eau permet théoriquement de transformer deux liaisons $SiOR^2$ en une liaison siloxanique Si—O—Si). L'hydrolyse peut avoir lieu au sein ou non d'un solvant hydrocarboné ou halogénohydrocarboné.

En dehors des silanes (1) et de leurs produits d'hydrolyse partielle, sont également utilisables, et dans les mêmes proportions, les produits de réaction des silanes (2) de formule:

$$CH_2{=}C(R^1)COO(CH_2)_aSi(OR^2)_3$$

(formule découlant de celle des silanes (1) lorsque b = 0) avec des huiles diorganopolysiloxaniques F. limitées à celles bloquées à chaque extrémité de leur chaîne par un radical hydroxylé, ayant une viscosité de 70 à 500 mPa.s à 25°C et renfermant au moins 60% de radicaux méthyles et au plus 3% de radicaux vinyles. Ces huiles seront appelées par la suite F'.

Les huiles F'. et les silanes (2) doivent être mélange en des proportions telles que le rapport molaire $SiOH/SiOR_4$ s'étende de 0,1 à 0,95. De plus, la réaction est catalysée à l'aide d'un composé choisi parmi les titanates et polytitanates d'alkyles et les sels de diorganoétain d'acides carboxyliques aliphatiques, à raison de 0,05 à 2 parties, pour 100 parties du mélange des huiles F'. et des silanes (2). L'alcool formé, de formule $R^4OH$, au cours de la réaction peut être éliminé ou non des mélanges réactionnels. Si on l'elimine, il ne faut pas dépasser 45% de la quantité pondérale théorique basé sur le nombre des radicaux SiOH et $SiOR_4$ présents dans les mélanges. Un tel procédé est décrit dans le brevet français FR—A—2 447 386; il conduit à des compositions organopolysiloxanes stables, de viscosité 60 mPa.s à 20 000 mPa.s à 25°C.

Comme produit E. on peut utiliser au moins un produit choisi parmi les oxydes et hydroxydes des métaux alcalino-terreux, c'est-à-dire du beryllium, du magnésium, du calcium, du strontium, du baryum et du radium, à une teneur de 0,1 à 20 parties, de préférence 1,0 à 10 parties, pour 100 parties de gomme A.

L'oxyde de calcium CaO, l'oxyde de magnésium MgO, l'hydroxyde de calcium Ca $(CH)_2$ et l'hydroxyde de magnésium $Mg(OH)_2$ sont les produits E. préférés.

Les produits E. peuvent être introduits tels quels dans la composition organopolysiloxane ou bien se trouver déjà à la surface des charges B. comme par exemple décrit dans le brevet américain US—A—4 463 108 ou bien, dans le cas où on utilisé de l'hydroxyde de calcium, de produit peut avoir été préalablement traité par un composé organosilicié analogue à ceux décrits ci-dessus pour le traitement des charges A., conformément à l'enseignement du brevet US—A—4 301 056.

D'autres additifs peuvent être ajoutés aux compositions selon l'invention, notamment:

du platine ou un composé du platine conformément à l'enseignement du brevet US—A—3 514 424 en vue d'améliorer la résistance à la flamme,

un acide gras (stéarique, laurique, oléique, palmitique), ou son sel métallique pour améliorer la travaillabilité conformément à l'enseignement de la demande japonaise KOKAI 58/027 749,

un stabilisant thermique choisis parmi un sel d'acide organique de fer, par exemple l'octoate de fer, à la dose de 20 à 50 ppm de fer par rapport au poids total de la composition, et de l'oxyde de titane, conformément à l'enseignement des brevets américains US—A—3 647 741 et US—A—3 692 737.

La préparation des compositions conformes à l'invention s'effectue à l'aide de moyens mécaniques connus, par exemple de pétrins, de mélangeurs à cyclindres, de mélangeurs à vis. Les divers constituants sont incorporés dans ces appareils dans un ordre pouvant être quelconque. Il est toutefois recommandé de charger tout d'abord les gomme A. et les silices renforçantes B. et en dernier lieu les péroxydes C.

Les compositions obtenues sont stables au stockage. Elles sont particulièrement aptes au moulage et à l'extrusion-moulage.

Elles sont durcissables en élastomères par chauffage sous pression ou à l'air ambiant à des températures de l'ordre de 100 à 350°C, et/ou par irradiation à un rayonnement gamma à des doses comprises entre 8 et 20 Mrads. La durée de chauffage varie évidemment avec la température, la pression et la nature des péroxydes; elle est généralement de plusieurs minutes vers 100—200°C et de quelques secondes vers 250—350°C. Le traitement par irradiation permet d'améliorer encore la tenue aux huiles conformément à l'enseignement du brevet français FR—A—2 057 433.

Les élastomères ainsi formés peuvent être chauffés ultérieurement, surtout ceux obtenus par moulage, dans l'intervalle 200—280°C, pendant une période d'au moins une heure, dans le dessein d'achever leur réticulation et d'éliminer les matières volatiles qu'ils renferment.

Les compositions conformes à l'invention sont utilisables pour la fabrication par moulalge, calandrage, extrusion, de nombreuses pièces en élastomères silicones ou d'objets recouverts par ce élastomèresm, en particulier pour réaliser des points d'étanchéité en contact avec les diverses huiles chaudes utilisées pour la fabrication de pièces mécaniques.

Les exemples suivants illustrent l'invention sans en limiter la portée.

## Exemple 1

Préparation du mélange maitre MM:

On mélange intimement à l'aide d'un malaxeur les ingrédients suivants:

100 parties d'un gomme A. diméthylméthylvinylpolysiloxane bloquèe à chacune de ses deux extrémités par un motif triméthylsiloxyle et comprenant dans sa chaîne 99,8% molaire de motifs diméthylsiloxyles et 0,2% molaire de motifs vinylméthylsiloxy et de viscosité 10 000 000 de mPa.s a 25°C,

45 parties de charge B. qui est une silice de combustion de surface spécifique BET de 300 $m^2$/g,

0,5 partie de gammaméthacryloxypropyltriméthoxysilane (produit D.),

1,6 partie d'une huile diméthylpolysiloxane de viscosité 50 mPa.s à 25°C, bloquée à chacune de ses extrémités (huile F.), par un groupe silanol,

3 parties de MgO (produit E.).

Le malaxage est arrêté 30 minutes après la fin de l'introduction de la silice. On enlève du malaxeur la composition homogène venant d'être préparée et qui est appelée le mélange maître (MM).

On transfère le MM sur un mélangeur à 2 cylindres pour incorporer 0,5% de péroxyde C1 qui est le diméthyl-2,5 di(tertiobutylperoxy)-2,5 hexane et 60% de charge B'. qui est du quartz broyé $B'_1$ de surface spécifique 1,7 $m^2$/g (% par rapport au poids de MM).

La composition est durcie en élastomère par chauffage dans des moules dont certains ont une profondeur de 2 mm et d'autres de 8 mm pendant 10 minutes à 170°C sous une pression de 30 bars. On obtient ainsi des plaques à l'état non recuit (NR).

On soumet alors des lots différents de plaques:

à un recuit R de 4 heures à 200°C,

à un recuit R de 16 heures à 200°C,

à u vieillissement de 7 jours à 225°C,

à un vieillissement de 10 jours à 225°C.

On prélève ensuite dans ces plaques des échantillons normalisés et mesure les propriétés suivants:

dureté SHORE A. (DSA) selon la norme ASTMD: 2 240

retrait linéaire (RL) en %

résistance à la rupture (R/R) selon la norme AFNOR T 46 002 correspondant à la norme ASTMD 412 MPa

allongement à la rupture (A/R) en % selon la norme précédente T 46 002

résistance à la déchirure (R/D) selon la norme ASTM D 624 en kNm

déformation rémanente à la compression (DRC) mesurée en % après un éventuel chauffage des éprouvettes sous 25% de compression

résilience ZWICK (RZ) en % selon la norme DIN 53 512

module élastique (ME) à 100% en MPa.

Les tenues aux huiles sont faites après recuisson 16 heures à 200°C dans l'huile normalisée ASTM 1 (70 heures à 180°C) dans l'huile normalisée ASTM 3 à caractère aromatique (70 heures à 150°C) et dans l'huile Sunfill T 141$^R$ commercialisée par la Société SONOCO qui se rapproche le plus des huiles moteurs (1 mois à 150°C), cette dernière étant généralement plus agressive que les huiles ASTM 1 et ASTM 3.

On mesure alors pour chacune des huiles les différences Δ en % en plus ou en moins de certaines des

propriétés indiquées ci-dessus (Δ DSA, Δ R/R, Δ A/R) ainsi que le variations de poids Δ p et de volume (ΔV) qui sont liées.

Exemples 2 a 12 et Exemples Comparatifs 13 a 21

Les compositions des exemples 1 à 12 et des exemples comparatifs 13 à 19 sont rassemblées dans le tableau 1 dans lequel $B'_2$ représente une terre de diatomées (fossiles ou coquillages finement broyés) et $C_2$ est le peroxyde de dichloro-2,4 benzoyle. Bien entendu les compositions des exemples 2 à 12 et des exemples comparatifs 13 à 21 sont effectués en suivant le mode opératoire de l'exemple 1.

Les mesures des propriétés mécaniques et la tenue aux huiles mesurées comme à l'exemple 1 sont rassemblées dans les tableaux 2 à 6 ci-après.

Dans les tableaux 2 et 3, on montre que l'addition du seul silane D. (exemples comparatifs 14 et 15) au mélange maître MM (exemple comparatif 13), améliore les propriétés mécaniques mais abaisse plutôt la tenue aux huiles.

Les tableaux 4, 5 et 6 montrent l'effet de synergie au niveau des propriétés mécaniques de l'addition simultanée d'additif D et E sans charge B' (exemples 5, 7 et 8) ou avec charge B' (exemples 1 à 4 et 9 à 12).

Aux exemples comparatifs 19, 20 et 21 (tableau 6) on montre que l'addition du seul produit E n'améliore pas sensiblement la tenue aux huiles et les propriétés mécaniques et que l'addition du seul produit D améliore uniquement les caractéristiques mécaniques alors que l'addition simultanée des additifs D. et E. provoquent une synergie au niveau de la tenue aux huiles et des propriétés mécaniques.

L'exemple comparatif 18, démontre que la substitution d'octoate de calcium à l'additif E. ne permet des d'atteindre le but visé par la présente invention.

TABLEAU 1

| Exemples | | 1 | 2 | 3 | 4 | 5 | 6 | 7 | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|---|---|---|---|---|---|
| Constituants en parties | A | 100 | 100 | 100 | 100 | 100 | 100 | 100 | 100 | 100 | 100 | 100 | 100 | 100 | 100 | 100 | 100 | 100 | 100 | 100 | 100 | 100 |
| | B | 45 | 45 | 45 | 45 | 45 | 45 | 45 | 45 | 45 | 45 | 45 | 45 | 45 | 45 | 45 | 45 | 45 | 45 | 45 | 45 | 45 |
| B'* | $B'_1$ | 60 | 60 | — | 50 | — | — | — | 50 | — | 60 | 60 | — | — | — | — | — | — | — | — | — | — |
| | $B'_2$ | — | — | — | — | — | — | — | — | — | 50 | — | — | — | — | — | 60 | 60 | — | — | — | — |
| | $C_1$* | 0,5 | 0,5 | 0,5 | 0,5 | 0,5 | | 0,5 | 0,5 | 0,5 | 0,5 | 0,5 | 0,5 | 0,5 | 0,5 | 0,5 | 0,5 | 0,5 | 0,5 | | — | — |
| | $C_2$* | — | — | — | — | — | 0,6 | — | — | — | — | — | — | — | — | — | — | — | — | 0,6 | 0,6 | 0,6 |
| | D | 0,5 | 0,5 | 0,5 | 1 | 0,5 | 0,5 | 1 | 0,5 | 1 | 1 | 0,5 | 0,5 | — | 0,5 | 1 | 0,5 | 0,5 | 0,5 | — | — | 0,5 |
| E | MgO | 3 | 5 | 1 | 1 | — | — | — | — | — | — | — | — | — | — | — | — | — | — | — | — | — |
| | CaO | — | — | — | — | 0,5 | 1 | 1 | — | 1 | 1 | 3 | 5 | — | — | — | — | — | — | 1 | — | — |
| | $Ca(OH)_2$ | — | — | — | — | — | — | — | 1 | — | — | — | — | — | — | — | — | — | — | — | — | — |
| | F | 1,6 | 1,6 | 1,6 | 1,6 | 1,6 | 1,6 | 1,6 | 1,6 | 1,6 | 1,6 | 1,6 | 1,6 | 1,6 | 1,6 | 1,6 | 1,6 | 1,6 | 1,6 | 1,6 | 1,6 | 1,6 |
| Octoate de Ca | | — | — | — | — | — | — | — | — | — | — | — | — | — | — | — | — | — | 0,5 | — | — | — |

*: en % en poids par rapport au poids de MM.

TABLEAU 2

| Exemples | | 13 | 14 | 15 |
|---|---|---|---|---|
| | NR | 46 | 57 | 62 |
| DSA | R: 16 heures à 200°C | 56 | 65 | 70 |
| | R: 10 jours à 225°C | 66 | 71 | 75 |
| | R: 7 jours à 250°C | 67 | 74 | 81 |
| RL | NR | 3,8 | 3,8 | 3,8 |
| | R: 16 heures à 200°C | 4,9 | 5,3 | 4,9 |
| | R: 10 jours à 225°C | 5,3 | 5,6 | 5,4 |
| | R: 7 jours a 250°C | 5,6 | 6,2 | 5,9 |
| R/R | NR | 7,6 | 10,1 | 10 |
| | R: 16 heures à 200°C | 9,7 | 10,3 | 10 |
| | R: 10 jours à 225°C | 7,1 | 6,2 | 6,8 |
| | R: 7 jours à 250°C | 7,7 | 6,3 | 6,3 |
| A/R | NR | 640 | 540 | 520 |
| | R: 16 heures à 200°C | 610 | 480 | 380 |
| | R: 10 jours à 225°C | 360 | 300 | 250 |
| | R: 7 jours à 250°C | 310 | 180 | 85 |
| R/D | NR | 32 | 31 | 32 |
| | R: 16 heures à 200°C | 33 | 28 | 29 |
| | R: 10 jours à 225°C | 24 | 18 | 16 |
| | R: 7 jours à 250°C | 18 | 13 | 11 |
| DRC | R: 16 heures à 200°C | 40 | 40 | 33 |
| RZ | NR | 25 | 33 | 36 |
| | R: 16 heures à 200°C | 28 | 38 | 36 |
| ME | NR | 0,63 | 1,30 | 1,50 |
| | R: 16 heures à 200°C | 1,10 | 1,70 | 3,10 |
| | R: 10 jours à 225°C | 0,44 | 1,10 | 3,20 |
| | R: 7 jours à 250°C | 2,60 | 3,90 | — |

TABLEAU 3

| Exemples | | | 13 | 14 | 15 |
|---|---|---|---|---|---|
| DSA | | NR | 46 | 57 | 62 |
| | | R 16 heures à 200°C | 56 | 65 | 70 |
| Δ DSA | ASTM 1 | NR | +4 | 0 | +1 |
| | | R 16 heures à 200°C | −3 | −4 | −5 |
| | ASTM 3 | NR | −14 | −19 | −21 |
| | | R 16 heures à 200°C | −20 | −26 | −30 |
| | Sunfill | NR | −15 | −18 | −16 |
| | | R 16 heures à 200°C | — | — | — |
| R/R | | NR | 7,6 | 10,1 | 10,0 |
| | | R 16 heures à 200°C | 9,7 | 10,3 | 10,0 |
| Δ R/R | ASTM 1 | NR | −34 | −51 | −53 |
| | | R 16 heures à 200°C | −46 | −46 | −48 |
| | ASTM 3 | NR | −79 | −86 | −89 |
| | | R 16 heures à 200°C | −84 | −86 | −86 |
| | Sunfill | NR | −54 | −76 | −28 |
| | | R 16 heures à 200°C | — | — | — |
| AR % | | NR | 640 | 540 | 520 |
| | | R 16 heures à 200°C | 610 | 480 | 380 |

TABLEAU 3 (suite)

| Exemples | | | 13 | 14 | 15 |
|---|---|---|---|---|---|
| Δ A/R | ASTM 1 | NR | −40 | −40 | −49 |
| | | R 16 heures à 200°C | −50 | −45 | −28 |
| | ASTM 3 | NR | −73 | −78 | −80 |
| | | R 16 heures à 200°C | −77 | −78 | −69 |
| | Sunfill | NR | −43 | −56 | −40 |
| | | R 16 heures à 200°C | — | — | — |
| Δ P | ASTM 1 | NR | +4,2 | +3,9 | +4,2 |
| | | R 16 heures à 200°C | +4,9 | +4,3 | +5,4 |
| | ASTM 3 | NR | +20 | +19 | +21 |
| | | R 16 heures à 200°C | +19 | +20 | +24 |
| | Sunfill | NR | +25 | +22 | +23 |
| | | R 16 heures à 200°C | — | — | — |
| Δ V | ASTM 1 | NR | +6,6 | +5,4 | +6,4 |
| | | R 16 heures à 200°C | +6,6 | +4,9 | +7,2 |
| | ASTM 3 | NR | +26 | +25 | +26 |
| | | R 16 heures à 200°C | +25 | +26 | +29 |
| | Sunfill | NR | +36 | +31 | +33 |
| | | R 16 heures à 200°C | — | — | — |
| DRC | | NR | 78 | 47 | 64 |
| | | R 16 heures à 200°C | 40 | 40 | 33 |
| | | R 10 jours à 225°C | 19 | 24 | 25 |
| | | R 7 jours à 250°C | 21 | 26 | 28 |

TABLEAU 4

| Exemples | | 16 | 1 | 2 | 17 | 11 | 12 |
|---|---|---|---|---|---|---|---|
| DSA | NR | 70 | 70 | 70 | 70 | 70 | 69 |
| | R 16 heures à 200°C | 78 | 78 | 78 | 78 | 79 | 79 |
| | R 10 jours à 225°C | 83 | 87 | 89 | 83 | 85 | 85 |
| | R 7 jours à 250°C | 84 | 89 | 90 | 84 | 87 | 88 |
| RL | NR | 3,4 | 3,0 | 2,9 | 3,4 | 3,0 | 2,9 |
| | R 16 heures à 200°C | 3,9 | 3,9 | 3,7 | 3,9 | 4,0 | 3,6 |
| | R 10 jours à 225°C | 4,2 | 6,2 | 7,3 | 4,2 | 5,2 | 5,2 |
| | R 7 jours à 250°C | 4,4 | 6,7 | 8,0 | 4,4 | 6,2 | 6,8 |
| R/R | NR | 8,7 | 8,2 | 8,1 | 8,7 | 8,4 | 7,9 |
| | R 16 heures à 200°C | 8,7 | 9,5 | 9,5 | 8,7 | 9,2 | 8,1 |
| | R 10 jours à 225°C | 7,0 | 7,0 | 7,0 | 7,0 | 6,8 | 6,1 |
| | R 7 jours à 250°C | 6,6 | 6,7 | 6,7 | 6,6 | 6,3 | 6,4 |
| A/R | NR | 260 | 230 | 230 | 260 | 230 | 230 |
| | R 16 heures à 200°C | 250 | 180 | 190 | 250 | 180 | 170 |
| | R 10 jours à 225°C | 135 | 140 | 90 | 135 | 125 | 90 |
| | R 7 jours à 250°C | 95 | 75 | 60 | 95 | 85 | 70 |
| R/D | NR | 19 | 18 | 19 | 19 | 19 | 19 |
| | R 16 heures à 200°C | 19 | 21 | 21 | 19 | 22 | 22 |
| | R 10 jours à 225°C | 16 | 18 | 20 | 16 | 17 | 17 |
| | R 7 jours à 250°C | 16 | 19 | 20 | 16 | 18 | 19 |
| DRC | R 16 heures à 200°C | 41 | 37 | 40 | 41 | 40 | 42 |
| RZ | NR | 32 | 31 | 30 | 32 | 31 | 30 |
| | R 16 heures à 200°C | 34 | 32 | 31 | 34 | 34 | 34 |
| ME | NR | 3,1 | 3,2 | 3,3 | 3,1 | 3,6 | 2,8 |
| | R 16 heures à 200°C | 3,8 | 5,6 | 5,4 | 3,8 | 5,6 | 5,0 |
| | R 10 jours à 225°C | 5,8 | 6,1 | — | 5,8 | 6,0 | — |
| | R 7 jours à 250°C | — | — | — | — | — | — |

TABLEAU 5

| Exemples | | 16 | 1 | 2 | 17 | 11 | 12 |
|---|---|---|---|---|---|---|---|
| DSA | R 16 h à 200°C | 78 | 78 | 78 | 78 | 79 | 79 |
| Δ DSA | ASTM 1 | −3 | −4 | −3 | −3 | −3 | −3 |
| | ASTM 3 | −31 | −21 | −21 | −31 | −23 | −22 |
| | Sunfill | — | −22 | −15 | — | −15 | −18 |
| R/R | R 16 h à 200°C | 8,7 | 9,5 | 9,5 | 8,7 | 9,2 | 8,1 |
| Δ R/R | ASTM 1 | −33 | −27 | −24 | −33 | −33 | −23 |
| | ASTM 3 | −76 | −40 | −35 | −76 | −61 | −44 |
| | Sunfill | — | −46 | −18 | — | −20 | −32 |
| A/R | R 16 h à 200°C | 250 | 180 | 190 | 250 | 180 | 170 |
| Δ A/R | ASTM 1 | −43 | −13 | −19 | −43 | −32 | −24 |
| | ASTM 3 | −61 | −16 | −19 | −61 | −42 | −32 |
| | Sunfill | — | −39 | −24 | — | −21 | −17 |
| Δ P R 16 h à 200°C | ASTM 1 | +3,5 | +3,7 | +3,5 | +3,5 | +3,3 | +3,3 |
| | ASTM 3 | +18 | +18 | +18 | +18 | +18 | +18 |
| | Sunfill | — | +13 | +13 | — | +14 | +15 |
| Δ V R à 16 h à 200°C | ASTM 1 | +6,5 | +5,9 | +6,1 | +6,5 | +5,4 | +5,5 |
| | ASTM 3 | +28 | +29 | +28 | +28 | +27 | +28 |
| | Sunfill | — | +25 | +22 | — | +25 | +27 |

TABLEAU 6

| Exemples | 3 | 4 | 5 | 6 | 7 | 8 | 9 | 10 | 18 | 19 | 20 | 21 |
|---|---|---|---|---|---|---|---|---|---|---|---|---|
| N.R. | | | | | | | | | | | | |
| DSA | 63 | 82 | 62 | 66 | 64 | 62 | 79 | 91 | 60 | 50 | 50 | 67 |
| RL | 2,25 | 1,60 | 2,25 | — | 2,25 | 2,25 | 1,90 | 1,60 | 2,40 | — | — | — |
| R/R | 9,25 | 8,50 | 9,60 | 11,2 | 9,30 | 8,30 | 8,95 | 8,50 | 9,20 | 10 | 10,5 | 11,6 |
| A/R | 300 | 120 | 325 | 310 | 345 | 300 | 140 | 75 | 340 | 470 | 310 | 315 |
| R/D | 21 | 17 | 22 | 18 | 23 | 22 | 18 | 22 | 23 | 20 | 22,5 | 21 |
| DRC | 34 | 40 | 30 | 37 | 37 | 25 | 30 | 28 | 44 | 60 | 74 | 47 |
| RZ | 49 | 51 | 50 | — | 46 | 51 | 50 | 44 | 48 | — | — | — |
| R 4 h à 200°C | | | | | | | | | | | | |
| DSA | 66 | 82 | 66 | | 68 | 64 | 82 | 91 | 64 | | | |
| RL | 2,90 | 2,25 | 2,75 | | 2,90 | 2,75 | 2,25 | 1,90 | 3,05 | | | |
| R/R | 9 | 8,25 | 9,00 | | 9,15 | 8,65 | 8,80 | 8,50 | 10,4 | | | |
| A/R | 295 | 115 | 295 | | 340 | 305 | 130 | 65 | 375 | | | |
| R/D | 22 | 18 | 21 | | 23 | 21 | 19 | 21 | 22 | | | |
| DRC | 19 | 29 | 13 | | 16 | 14 | 18 | 28 | 19 | | | |
| RZ | 49 | 49 | 51 | | 49 | 51 | 50 | 45 | 50 | | | |
| Huile ATSM 1 | | | | | | | | | | | | |
| DSA et ΔDSA | 60 (−6) | 80 (−2) | 60 (−6) | | 66 (−2) | 59 (−5) | 80 (−2) | 89 (−2) | 59 (−5) | | | |
| R/R et ΔR/R | 7,50 (−16) | 8,8 (+6,7) | 8,30 (−7,8) | | 6,70 (−27) | 7,90 (−8,7) | 8,65 (−1,7) | 8,6 (+1) | 8,00 (−23) | | | |
| A/R et ΔA/R | 330 (+10) | 125 (+8,7) | 365 (+24) | | 305 (−10) | 375 (+23) | 135 (+3,9) | 70 (+8) | 400 (+67) | | | |
| ΔP | 4,2 | 2,3 | 4,6 | | 4,5 | 5 | 2 | 2,4 | 4,6 | | | |
| ΔV | 5,5 | 4,2 | 5,8 | | 6 | 6,8 | 3,9 | 3,7 | 5,8 | | | |
| Huile ASTM 3 | | | | | | | | | | | | |
| DSA et ΔDSA | 43 (−23) | 64 (−18) | 44 (−22) | 46 (−20) | 47 (−21) | 42 (−22) | 64 (−18) | 76 (−15) | 42 (−22) | 28 (−22) | 26 (−24) | 42 (−25) |
| R/R et ΔR/R | 4,7 (−49) | 6,5 (−21) | 4,4 (−51) | 6 (−46) | 3,07 (−66) | 4,2 (−51) | 5,7 (−35) | 6,8 (−20) | 2,4 (−77) | 5,5 (−45) | 4,2 (−60) | 5,3 (−51) |
| A/R et ΔA/R | 300 (0) | 115 (0) | 241 (−18) | 195 (−37) | 200 (−41) | 265 (−13) | 100 (−23) | 65 (0) | 205 (−45) | 275 (−40) | 280 | 210 |
| ΔP | 33 | 19 | 34 | — | 31 | 35 | 18 | 17 | 32 | — | — | — |
| ΔV | 40 | 30 | 41 | 37 | 37 | 42 | 28 | 25 | 39 | 49 | 50 | 50 |

**Revendications**

1. Composition élastomère organopolysiloxane vulcanisable à chaud, caractérisée en ce qu'elle comporte:

A. 100 parties d'au moins une gomme diorganopolysiloxane ayant une viscosité supérieure à 1 000 000 mPa.s à 25°C formée d'un enchaînement de motifs de formule $R_2SiO$, bloquée à chaque extrémité de sa chaîne par un motif de formule $R_2SiO_{0,5}$ et/ou un radical de formule OR', les symboles R, identiques ou différents, représentant des radicaux méthyle, éthyle, n-propyle, phényle, vinyle et trifluoro-3,3,3 propyle, au moins 60% en nombre de ces radicaux étant des radicaux méthyle, et au plus 3% molaire des motifs siloxy étant des motifs organovinylsiloxy, le symbole R' représentant un atome d'hydrogène, un radical alkyle ayant de 1 à 4 atomes de carbone, le radical betaméthoxy-éthyle.

B. 5 à 150 parties d'une charge renforçante.

C. 0,1 à 7 parties d'un peroxyde organique.

D. 0,01 à 5 parties d'un composé organosilicique comportant, relié à l'atome de silicium, au moins un groupe acryloxyalkyle ou méthacryloxyalkyle.

E. 0,1 à 20 parties d'au moins un produit choisi parmi les oxydes et les hydroxydes d'un métal alcalino-terreux.

2. Composition selon la revendication 1, caractérisée en ce que les charges B sont choisies parmi les silices de combustion et les silices de précipitation.

3. Composition selon l'une quelconque des revendications précedentes, caractérisée en ce que le composé organosilicique D. portant au moins un groupe acryloxyalkyle ou méthacryloxyalkyle peut être chois parmi:

un silane (1) répondant à la formule:

$$CH_2 = CR^1COO(CH_2)_a\overset{R''_b}{\overset{|}{Si}}(OR^2)_{3-b} \qquad (I)$$

dans laquelle le symbole R'' est choisi parmi les radicaux méthyle, vinyle et phényle, le symbole $R^1$ représente un atome d'hydrogène, le radical méthyle, le symbole $R^2$ représente un radical méthyle, éthyle, n-propyle, bétaméthoxyéthyle, le symbole a représente un nombre de 1 à 5 et le symbole b représente un nombre de 0 à 2;

les produits d'hydrolyse partielle du silane (1) précédent;

les polymères provenant de la réaction du silane (2) de formule $CH_2 = C(R^1)COO(CH_2)_aSi(OR^2)_3$, cette formule découlant de la formule précédente (1) lorsque b = 0, avec une huile diorganopolysiloxane qui est une huile de viscosité d'au plus 5000 mPa.s à 25°C formée d'un enchaînement de motifs de formule $R''_2$ SiO bloqué à chaque extrémité de sa chaîne par un radical hydroxyle, les radicaux R'' identiques ou différents sont choisis parmi les radicaux méthyle, phényle et vinyle au moins 40% en nombre de ces radicaux étant méthyle.

4. Composition selon l'une quelconque des revendications précedentes, caractérisée en ce que le produit E. est choisi par MgO, CaO, $Mg(OH)_2$ et $Ca(OH)_2$.

5. Composition selon l'une quelconque des revendications précedentes, caractérisée en ce qu'elle comporte en outre 0,1 à 10 parties, de préférence 0,3 à 5 parties d'une huile F diorganopolysiloxanique de viscosité d'au plus 5000 mPa.s à 25°C formée d'un enchaînement de motifs de formule $R''_2$ SiO bloqué à chaque extrémité de sa chaîne par un radical de formule OR'; dans ces formules les symboles R'', identiques ou différents, représentent des radicaux méthyle, phényle, vinyle, au moins 40% en nombre de ces radicaux étant méthyle et le symbole R' a la signification donnée à la revendication 1.

6. Composition selon l'une quelconque des revendications précedentes, caractérisée en ce qu'elle comporte en outre de 5 à 120 parties de charges semi-renforçantes ou de bourrage B'.

7. Composition selon la revendication 6, caractérisée en ce qu'elle comporte:

A. 100 parties,

B. 8 à 100 parties,

B'. 10 à 50 parties,

C. 0,2 à 5 parties,

D. 0,1 à 2 parties,

E. 1 à 10 parties,

F. 0,4 à 5 parties.

8. Composition selon l'une quelconque des revendications précedentes, caractérisée en ce que le composé D est le gammaméthacryloxypropyltriméthoxysilane.

9. Article moulé fabriqué à partir d'une composition telle que définie à l'une quelconque des revendications 1 à 8.

**Patentansprüche**

1. In der Wärme vulkanisierbare elastomere Organopolysiloxanzusammensetzung, dadurch gekennzeichnet, daß sie enthält.

A. 100 Teile zumindest eines Diorganopolysiloxangummis mit einer Viskosität von höher als 1 000 000 mPa.s bei 25°C, der durch eine Aneinanderreihung von Gruppen der Formel $R_2SiO$ gebildet und an jedem Ende seiner Kette durch eine Gruppe der Formel $R_3SiO_{0,5}$ und/oder einen Rest der Formel OR′ blockiert ist, wobei die Symbole R, die gleich oder verschieden sind, für Methyl-, Ethyl-, n-Propyl-, Phenyl-, Vinyl- und 3,3,3-Trifluoropropylreste stehen, wobei zumindest 60% der Anzahl dieser Reste Methylreste sind und höchstens 3 Molprozent der Siloxygruppen Organovinylsiloxygruppen sind, das Symbol R′ ein Wasserstoffatom, einen Alkylrest mit 1 bis 4 Kohlenstoffatomen oder den β-Methoxyethylrest bedeutet;

B. 5 bis 10 Teile eines Verstärkungszusatzes

C. 0,1 bis 7 Teile eines organischen Peroxids

D. 0,01 bis 5 Teile einer Organo-Siliciumverbindung, die, gebunden an das Siliciumatom zumindest eine Acryloxyalkyl- oder Methacryloxyalkylgruppe enthalt

E. 0,1 bis 20 Teile zumindest eines Produkts ausgewählt unter den Oxiden und den Hydroxiden der Erdalkalimetalle.

2. Zusammentsetzung gemäß Anspruch 1, dadurch gekennzeichnet, daß die Zusätze B unter den der Verbrennung entstammenden Siliciumdioxiden und den der Ausfällung entstammenden Siliciumdioxiden ausgewählt sind.

3. Zusammensetzung gemäß einem der vorhergehenden Ansprüche, dadurch gekennzeichnet, daß die Organo-Siliciumverbindung D, die zumindest eine Acryloxyalkyl- oder Methacryloxyalkylgruppe enthält, ausgewählt sein kann water

einem Silan (1) der Formel

$$CH_2 = CR^1COO(CH_2)_a\overset{R''_b}{\overset{|}{Si}}(OR^2)_{3-b} \qquad (I)$$

worin das Symbol R″ unter den Methyl-, Vinyl- und Phenylresten ausgewählt ist, das Symbol $R^1$ fur ein Wasserstoffatom oder den Methylrest steht, das Symbol $R^2$ eine Methyl-, Ethyl-, n-Propyl oder β-Methoxyethylgruppe wiedergibt, das Symbol a für eine Zahl von 1 bis 5 und das Symbol b für eine Zahl von 0 bis 3 steht;

den Produkten der partiellen Hydrolyse des vorstehenden Silans (1)

den polymeren, die der Reaktion des Silans (2) der Formel $CH_2 = C(R^1)COO(CH_2)_aSi(OR^2)_3$, wobei diese Formel sich von der vorstehenden Formel (1) ableitet, wenn $b = 0$, mit einem Diorgano-Polysiloxanöl entstammen, das ein Öl mit einer Viskosität von höchstens 5000 mPa.s bei 25°C ist, welches durch eine Aneinanderreihung von Gruppen der Formel $R''_2SiO$ gebildt wird und an jedem Ende seiner Kette durch eine Hydroxylgruppe blockiert ist, wobei die Reste R″, die gleich oder verschieden sind, unter den Methyl-, Phenyl- und Vinylresten ausgewählt sind und zumindest 40% der Anzahl dieser Reste Methylrest sind.

4. Zusammensetzung gemäß einem der vorhergehenden Ansprüche, dadurch gekennzeichnet, daß das Produkt E unter MgO, CaO, $Mg(OH)_2$ und $Ca(OH)_2$ ausgewählt ist.

5. Zusammensetzung gemäß einem der vorhergehenden Ansprüche, dadurch gekennzeichnet, daß sie außerdem 0,1 bis 10, vorzugsweise 0,3 bis 5 Teile eines Diorganopolysiloxanöls F mit einer Viskosität von höchstens 5000 mPa.s bei 25°C enthält das durch eine Aneinanderreihung von Gruppen der Formel $R''_2SiO$ gebildet wird, und an jedem seiner Kettendenden durch einen Rest der Formel OR′ blockiert ist, wobei in diesen Formeln die Symbole R″, die gleich oder verschieden sind, für einen Methyl-, Phenyl- oder Vinylrest stehen, wobei zumindest 40% der Anzahl dieser Rest Methylreste sind und das Symbole R′ die in Anspruch 1 angegebene Bedeutung besitzt.

6. Zusammensetzung gemäß einem der vorhergehenden Ansprüche, dadurch gekennzeichnet, daß sie außerdem 5 bis 120 Teile an semiverstärkenden Zusätzen oder an Füllstoff B′ enthält.

7. Zusammensetzung gemäß Anspruch 6, dadurch gekennzeichnet, daß sie enthält

A. 100 Teile

B. 8 bis 100 Teile

B′. 10 bis 50 Teile

C. 0,2 bis 5 Teile

D. 0,1 bis 2 Teile

E. 1 bis 10 Teile

F. 0,4 bis 5 Teile.

8. Zusammensetzung gemäß einem der vorhergehenden Ansprüche, dadurch gekennzeichnet, daß die Verbindung D γ-Methacryloxy-propyltrimethoxysilan ist.

9. Formgegenstand, hergestellt aus einer Zusammensetzung gemäß einem der Ansprüche 1 bis 8.

**Claims**

1. Organopolysiloxane elastomer composition capable of being vulcanized when heated, characterized in that it comprises:

A. 100 parts of at least one diorganopolysiloxane resin with a viscosity higher than 1,000,000 mPa s at 25°C, made up of a chain sequencing of units of formula $R_2SiO$, blocked at each end of its chain by a unit of formula $R_3SiO_{0,5}$ and/or a radical of formula OR′, the symbols R, which are identical or different, denoting methyl, ethyl, n-propyl, phenyl, vinyl and 3,3,3-trifluoropropyl radicals, at least 60% of the number of these radicals being methyl radicals, and not more than 3 mol% of the siloxy units being organovinylsiloxy units, the symbol R′ denoting a hydrogen atom, an alkyl radical containing from 1 to 4 carbon atoms or the beta-methoxyethyl radical,

B. 5 to 150 parts of a reinforcing filler,

C. 0.1 to 7 parts of an organic peroxide,

D. 0.01 to 5 parts of an organosilicon compound containing at least one acryloyloxyalkyl or methacryloyloxyalkyl group bonded to the silicon atom,

E. 0.1 to 20 parts of at least one product chosen from the oxides and the hydroxides of an alkaline-earth metal.

2. Composition according to Claim 1, characterized in that the fillers B are chosen from pyrogenic silicas and precipitated silicas.

3. Composition according to either of the preceding claims, characterized in that the organosilicon compound D carrying at least one acryloyloxyalkyl or methacryloyloxyalkyl group may be chosen from:

a silane (1) corresponding to the formula

$$CH_2 = CR^1COO(CH_2)_a\overset{R''_b}{\overset{|}{Si}}(OR^2)_{3-b} \qquad (I)$$

in which the symbol R″ is chosen from methyl, vinyl and phenyl radicals, the symbol $R^1$ denotes a hydrogen atom or the methyl radical, the symbol $R^2$ denotes a methyl, ethyl, n-propyl or beta-methoxyethyl radical, the symbol a denotes a number from 1 to 5 and the symbol b denotes a number 0 to 2;

the partial hydrolysis products of the above silane (1);

the polymers originating from the reaction of the silane (2) of formula $CH_2{=}C(R^1)COO(CH_2)_aSi(OR^2)_3$, this formula stemming from the above formula (I) when b = 0, with a diorganopolysiloxane oil which is an oil with a viscosity of not more than 5000 mPa s at 25°C, made up of a chain sequencing of units of formula $R''_2SiO$, blocked by a hydroxyl radical at each end of its chain, the radicals R″, which are identical or different, are chosen from methyl, phenyl and vinyl radicals, at least 40% of the number of these radicals being methyl.

4. Composition according to any one of the preceding claims, characterized in that the product E. is chosen from MgO, CaO, $Mg(OH)_2$ and $Ca(OH)_2$.

5. Composition according to any one of the preceding claims, characterized in that it additionally comprises 0.1 to 10 parts, preferably 0.3 to 5 parts, of a diorganopolysiloxane oil F with a viscosity of not more than 5000 mPa s at 25°C, made up of a chain sequencing of units of formula $R''_2SiO$, blocked by a radical of formula OR′ at each end of its chain; in these formulae the symbols R″, which are identical or different, denote methyl, phenyl or vinyl radicals, at least 40% of the number of these radicals being methyl, and the symbol R′ has the meaning given in Claim 1.

6. Composition according to any one of the preceding claims, characterized in that it additionally comprises from 5 to 120 parts of semireinforcing or packing fillers B′.

7. Composition according to Claim 6, characterized in that it comprises:

A. 100 parts,
B. 8 to 100 parts,
B′. 10 to 50 parts,
C. 0.2 to 5 parts,
D. 0.1 to 2 parts,
E. 1 to 10 parts,
F. 0.4 to 5 parts.

8. Composition according to any one of the preceding claims, characterized in that the compound D is gammamethacryloxypropyltrimethoxysilane.

9. Moulded article manufactured from a composition such as defined in any one of Claims 1 to 8.